(19) Europäisches Patentamt
European Patent Office
Office européen des brevets

(11) **EP 3 385 783 A1**

(12) **EUROPÄISCHE PATENTANMELDUNG**

(43) Veröffentlichungstag:
**10.10.2018 Patentblatt 2018/41**

(51) Int Cl.:
**G02F 1/29** *(2006.01)*   *G02C 7/02* *(2006.01)*

(21) Anmeldenummer: **17164694.6**

(22) Anmeldetag: **04.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Telefónica Germany GmbH & Co. OHG 80992 München (DE)**

(72) Erfinder:
• **Müllner, Robert**
**81479 München (DE)**

• **Leth-Espensen, Mads**
**82110 Germering (DE)**
• **Widder, Dr. Wolfgang**
**82362 Weilheim (DE)**

(74) Vertreter: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **VERFAHREN ZUR KORREKTUR DER PHYSIOLOGISCHEN AKKOMMODATION EINES BETRACHTERS WÄHREND DES BETRACHTENS EINES VISUELLEN OBJEKTES**

(57)    Die vorliegende Erfindung betrifft ein Verfahren zur Korrektur der physiologischen Akkommodation eines Betrachters während des Betrachtens eines visuellen Objektes, dadurch gekennzeichnet, dass auf oder an dem zu betrachtenden Objekt ein transparentes Material aufgebracht wird und/oder das zu betrachtende Objekt das transparente Material umfasst, wobei der Brechungsindex des transparenten Materials über eine elektronische Steuerung manuell und/oder automatisch auf die Sehstärke des Betrachters eingestellt wird.

EP 3 385 783 A1

**Beschreibung**

Die Erfindung betrifft ein Verfahren zur Korrektur der physiologischen Akkommodation eines Betrachters während des Betrachtens eines visuellen Objektes.

Viele Menschen leiden unter einer Sehschwäche wie Kurzsichtigkeit oder Weitsichtigkeit. Bei beiden Sehschwächen besteht das Problem darin, dass durch einen axialen Brechungsfehler der Brennpunkt des Lichtstrahlengangs nicht direkt auf der Netzhaut liegt, sondern entweder davor oder dahinter. Als Folge nimmt der Betrachter das Licht emittierende oder reflektierende Objekt nur unscharf wahr. Durch Tragen einer Brille oder Kontaktlinse kann der Brennpunkt verschoben und somit der Brechungsfehler korrigiert werden.

Weitsichtige Personen benötigten zum Lesen eine Lesebrille, die nur für die Betrachtung naheliegender Objekte aufgesetzt wird. Im Alltag kommt es aber regelmäßig vor, dass die benötigte Lesehilfe genau dann nicht parat liegt, wenn der Nutzer sie benötigt. Häufig ist dies der Fall bei der alltäglichen Bedienung von Smartphones. Die vergleichsweise kleinen Bildschirme bereiten dem weitsichtigen Benutzer nicht nur Schwierigkeiten beim Lesen von Texten, sondern jede Bedienung des Smartphones kann aufgrund der häufig klein gehaltenen Menüdarstellung schwierig oder gar unmöglich sein. Abhilfe schaffen die von Weitsichtigkeit betroffenen Personen meist selbst durch eine Verlängerung des Abstandes zum Smartphone. Auch bieten zahlreiche Endgeräte eine Zoom-Funktion, um dargestellte Inhalte kurzzeitig zu vergrößern. Da die Darstellung der meisten Inhalte jedoch auf die Ursprungsgröße optimiert ist, müssen durch die Zoom-Funktion meist Beeinträchtigungen hinsichtlich des Lese- oder Bedienkomforts in Kauf genommen werden, wie bspw. ein häufiges Scrollen beim Lesen von Textinhalten. Die vorgenannten Probleme treten selbstredend nicht nur bei Smartphones auf, sondern bei jeder erdenklichen Form von Anzeigeelementen, die dem Nutzer Informationsinhalte zur Verfügung stellen. Diese Elemente sind nicht notwendigerweise elektronisch, auch bei Schaukästen mit Glas- oder Kunststoffscheiben treten die vorgenannten Probleme auf.

Gesucht wird daher nach einer Lösung für die oben genannte Problematik. Insbesondere ist es wünschenswert, die Darstellung eines Objektes bzw. die visuelle Wahrnehmung eines Objektes durch den Betrachter dahingehend zu optimieren, dass der Betrachter das Objekt auch ohne Sehhilfe gut, insbesondere scharf sehen kann.

Zur Problemlösung wird das erfindungsgemäße Verfahren gemäß den Merkmalen des Anspruchs 1 vorgeschlagen. Vorteilhafte Ausgestaltungen des Verfahrens sind Gegenstand der abhängigen Ansprüche.

Zweck des Verfahrens ist die Korrektur der physiologischen Akkommodation eines Betrachters während des Betrachtens eines visuellen Objektes. Bei dem zu betrachtenden Objekt handelt es sich bevorzugt um ein elektronisches Gerät, beispielsweise ein elektronisches Anzeigeelement. Jedoch ist die Erfindung auch für beliebige sichtbare Gegenstände anwendbar. Erfindungsgemäß wird vorgeschlagen, auf oder an dem zu betrachtenden Objekt ein transparentes Material aufzubringen, dessen Brechungsindex über eine elektronische Steuerung manuell und/oder automatisch individuell auf die Sehstärke des Betrachters eingestellt werden kann. Das transparente Material kann auch Bestandteil des Objektes sein, d.h. das Objekt oder Teile des Objektes sind aus dem speziellen transparenten Material mit variabel einstellbarem Brechungsindex gefertigt. Die Steuerung ist bevorzugt Bestandteil des Objektes, dies muss aber nicht zwingend der Fall sein. Denkbar ist eine Auslagerung auf eine externe Steuereinrichtung mit passende Schnittstelle zum Objekt oder zum transparenten Material mit variablem Brechungsindex.

Die beschriebene Methode ermöglicht eine individuelle Schärfekorrektur für unterschiedliche Betrachter mit Sehschwächen, insbesondere unmittelbar vor oder während des Betrachtens des Objektes.

Bei bisherigen Sehhilfen, d.h. Brillen oder Kontaktlinsen, werden die am Auge des Betrachters eintreffenden Lichtstrahlen einmal durch die Sehhilfe, d.h. eine Sammellinse, gebrochen und nachfolgend nochmals durch die Linse des Auges. Durch das Einbringen der Sehhilfe in den Strahlengang kann der Brennpunkt auf die Netzhaut verschoben werden und damit einen scharfen Seheindruck ermöglichen. Die vorliegende Erfindung geht einen Schritt weiter und verschiebt die Funktion der Sehhilfe bzw. Sammellinse auf die Lichtquelle selbst, in diesem Fall auf das zu betrachtende Objekt, insbesondere ein Anzeigeelement. Die von diesem Objekt ausgesendeten bzw. reflektierten Lichtstrahlen werden durch das eingebrachte Material mit einstellbarem Brechungsindex erstmalig gebrochen und breiten sich anschließend bis zum Auge des Betrachters aus. Dort werden sie erneut durch die Augenlinse gebrochen. Das Zusammenwirken des erfindungsgemäßen Materials in Verbindung mit der Augenlinse des Betrachters sorgt dafür, dass der Brennpunkt auf der Netzhaut des Betrachters liegt und dadurch ein scharfer Seheindruck entsteht. Zur Erreichung dieses Ziels ist die passende Ansteuerung des Materials notwendig, um den Brennpunkt möglichst genau auf die Netzhaut des Betrachters zu verschieben.

Der Brechungsindex soll bevorzugt in verschiedenen Ebenen variierbar sein, so dass sphärische und/oder zylindrische Abweichungen von einer idealen Sehstärke erfasst werden können.

Zur Steuerung des Brechungsindexes sollen die physikalischen Eigenschaften bestimmter Materialien ausgenutzt werden. Dieses Material kann beispielsweise Bestandteil des Objektes sein, demzufolge ist das Objekt zumindest teilweise aus dem Material gefertigt, oder das Material kann nachträglich auf das Objekt aufgebracht sein, beispielsweise bei einem elektronischen Anzeigeelement in Form einer auf den Darstellungsbereich aufgedampften Folie.

Der Brechungsindex kann beispielsweise manuell eingestellt werden, insbesondere durch einen betätigbaren Regler, sodass der Nutzer die subjektive Sehschärfe selbst einstellen kann. Von Vorteil ist auch eine automatische Einstellung des Brechungsindexes, wobei die elektronische Steuerung das Material situationsabhängig derart ansteuert, sodass der Betrachter das Objekt scharf wahrnehmen kann.

Wie bereits zu Beginn ausgeführt wurde, hängt die Position des Brennpunktes massgeblich vom Abstand des zu betrachtenden Objektes vom Betrachter ab. Demzufolge ist es vorteilhaft, wenn in Abhängigkeit des Abstandes zwischen Objekt und Betrachter der Brechungsindex automatisch durch die elektronische Steuerung eingestellt wird. Hierzu ist es besonders vorteilhaft, wenn wenigstens eine Abstandsermittlungsvorrichtung vorgesehen ist, die den Abstand zwischen Betrachter und visuellem Objekt automatisch ermittelt, idealerweise messen kann. Basierend auf diesem ermittelten bzw. gemessenen Abstandswert soll dann eine automatische Einstellung des passenden Brechungsindexes des transparenten Materials erfolgen.

Die Auswahl des passenden Brechungsindexes für jeden Abstand erfolgt beispielsweise auf Grundlage ein oder mehrerer hinterlegter Referenzwerte in der elektronischen Steuerung. Insbesondere ist für eine Vielzahl von unterschiedlichen Abstandswerten ein entsprechender Referenzbrechungsindex hinterlegt, sodass die elektronische Steuerung in Abhängigkeit des erfassten bzw. gemessenen Abstandes den passenden Referenzwert auswählen kann. Ist für den ermittelten Abstandswert kein passender Referenzwert verfügbar, so kann dieser beispielsweise per Interpolation aus den Referenzwerten für benachbarte Abstandswerte berechnet werden.

Denkbar ist es ebenso, dass ein oder mehrere Referenzwerte nicht in der elektronischen Steuerung hinterlegt sind, sondern stattdessen über eine passende Kommunikationsschnittstelle von einem externen Gerät abrufbar sind. Besonders bevorzugt ist es beispielsweise, wenn der Nutzer ein mobiles Endgerät mit sich führt, beispielsweise ein Smartphone, auf dem entsprechende Referenzwerte für unterschiedliche Abstände gemäß seiner Sehschwäche hinterlegt sind. Von diesem elektronischen Endgerät kann die Steuerung des Objektes, insbesondere ein elektronisches Anzeigeelement, die passenden Referenzwerte für den Brechungsindex abrufen und das transparente Material passend konfigurieren.

Ebenso besteht die Möglichkeit, die ein oder mehreren Referenzwerte mittels eines vom Betrachter auszuführenden Lernprozesses zu erzeugen. In diesem Fall muss der Betrachter beispielsweise menügesteuert für eine Vielzahl an Referenzabständen zwischen ihm und dem Objekt seinen subjektiv bevorzugten Brechungsindex manuell einstellen und bestätigen. Der ausgewählte Brechungsindex wird dann als Referenzwert für den entsprechenden Abstand gespeichert. Die Auswahl des passenden Brechungsindexes kann über einen manuellen Regler erfolgen. Von Vorteil ist hierfür ein entsprechender Einstellregler am Objekt, der eine schrittweise oder kontinuierliche Variation des Brechungsindex zulässt. Der Nutzer betätigt dieses für jeden Abstand so lange, bis er das Objekt subjektiv scharf wahrnehmen kann.

Möglich ist auch die Direkteingabe von Dioptrienwerten, auf deren Grundlage die Steuerung für jeden Abstand den passenden Brechungsindex bestimmt.

Ebenso besteht die Möglichkeit, ein oder mehrere Referenzwerte zu einem Profil zusammenzufassen. Beispielsweise sind in der elektronischen Steuerung oder auf einem externen Endgerät unterschiedliche Nutzerprofile dargestellt, die für unterschiedliche Abstandswerte entsprechende, auf den Nutzer zugeschnittene Referenzbrechungsindizes darstellen. Ferner ist die Einordnung ein oder mehrerer Referenzwerte in umgebungs- oder zeitabhängigen Profilen denkbar. Bei umgebungsabhängigen Profilen werden vorzugsweise die vorliegenden Lichtbedingungen berücksichtigt. Unter einem zeitabhängigen Profil ist beispielsweise die Zusammenfassung entsprechender Brechungsindizes für unterschiedliche Abstände denkbar, die besonders vorteilhaft bei Tageslichtbedingungen bzw. Nachbedingungen sind.

Auch sind objektspezifische Profile denkbar, die insbesondere unterschiedliche Referenzbrechungsindizes für unterschiedliche Objektarten, d.h. Displayarten oder auch nutzerspezifische Displayeinstellungen zusammenfassen. Nach Auswahl eines entsprechenden Profils für die Einstellung des Brechungsindex stehen für die Ansteuerung des Materials Referenzwerte zur Verfügung, die dem ausgewählten Profil zuzuordnen sind.

Ferner besteht die Möglichkeit, dass über eine externe Schnittstelle der elektronischen Steuerung und/oder des Objektes Profile und/oder Referenzwerte exportiert werden können. Dadurch können beispielsweise während eines Lernverfahrens erstellte Referenzwerte bequem an beliebig viele andere Objekte exportiert werden. Denkbar ist es auch, die Werte zur weiteren Analyse einer dritten Person zur Verfügung zu stellen, beispielsweise einem Augenarzt oder Augenoptiker.

Auch besteht die Möglichkeit, dass die auf einem externen Gerät gespeicherten Profile und/oder Referenzwerte von dem Objekt, insbesondere einem elektronischen Anzeigeelement, dann ausgelesen werden, wenn das Nutzerendgerät in den Sichtbereich des Objektes gelangt. Ein mögliches Anwendungsszenario ist hierzu beispielsweise ein öffentliches, elektronisches Anzeigeelement. Ein Betrachter hat auf seinem Endgerät, insbesondere Smartphone, passende Referenzwerte für unterschiedliche Abstände gespeichert. Gelangt dieses Endgerät bzw. der Nutzer in den Sichtbereich des öffentlichen Anzeigeelementes, so werden diese Referenzwerte automatisch an das Anzeigeelement übertragen. Durch automatische Konfiguration des Brechungsindex kann der Nutzer die auf dem öffentlichen elektronischen Anzeigeelement dargestellten Informationen scharf wahrnehmen. Konkrete Anwendungsfälle sind bspw. öffentliche Aushänge, Fahrpläne, elektronische Werbeplakate, usw..

Als mögliche Schnittstelle zwischen dem Objekt, insbesondere dem elektronischen Anzeigeelement, und dem Nutzerendgerät dient beispielsweise eine Bluetooth, WLAN, NFC (Near Field Communication)-Verbindung.

Wie bereits vorstehend erläutert wurde, wird der Brechungsindex abstandsabhängig eingestellt. Dies macht insbesondere eine Ermittlung des Abstandes zwischen Objekt und Betrachter notwendig. Liegt eine entsprechende Abstandsmesseinrichtung nicht vor, besteht die alternative Möglichkeit, den Brechungsindex auf einen vermuteten Abstand zwischen Betrachter und Objekt einzustellen. Bei Smartphones wird hier üblicherweise ein Leseabstand von 20 bis 50cm zwischen Betrachter und Objekt vermutet.

Soll der Abstand ermittelt bzw. gemessen werden, kann dies auf Grundlage eines Distanzsensors erfolgen. Ebenso ist eine Abstandsmessung unter Zuhilfenahme wenigstens einer Kamera denkbar, die ohnehin Bestandteil zahlreicher elektronischer Anzeigeelemente ist. Denkbar ist auch die Verwendung einer externen Kamera, die kommunikativ mit dem Objekt in Verbindung steht. Mittels der Kamera kann der Betrachter optisch erfasst und auf Grundlage geeigneter Verfahren der Abstand zwischen Kamera und Betrachter berechnet werden. Mittels geometrischer Korrekturterme kann aus dem berechneten Kamera-Betrachter-Abstand der tatsächliche Abstand zwischen dem Auge des Betrachters und dem Darstellungsbereich des Objektes ermittelt werden. Dies macht jedoch die Kenntnis der relativen Position der Kamera zum betrachteten Objekt notwendig.

Denkbar ist es ebenso, dass die Abstandsermittlungsvorrichtung Positionsdaten von Objekt und/oder Betrachter für die Abstandsermittlung berücksichtigt. Auf Grundlage dieser Positionsdaten, insbesondere in Form von geographischen Koordinaten, lässt sich der Abstand zwischen Objekt und Betrachter berechnen. Die notwendigen Positionsdaten kann die Abstandsermittlungsvorrichtung entweder selbst bestimmen oder alternativ über eine geeignete Kommunikationsschnittstelle von geeigneten Sensoren des Objektes bzw. einem vom Betrachter mitgeführten elektronischen Gerät erfragen. Denkbar ist es beispielsweise, dass Objekt und Betrachter bzw. ein mit dem Betrachter mitgeführtes Endnutzergerät mit entsprechenden Positionssensoren wie GPS-Modulen etc. ausgestattet sind. Denkbar ist auch der Einsatz bestimmter sonstiger Kommunikationstechniken, wie Mobilfunknetze, WLAN, etc., um insbesondere mittels Triangulationsverfahren die exakten Positionsdaten zu bestimmen.

Da die Wellenlänge des vom Objekt emittierten Lichtes Einfluss auf den notwendigen Brechungsindex haben kann, ist es gemäß vorteilhafter Ausgestaltung der Erfindung sinnvoll, wenn der Brechungsindex des Materials in Abhängigkeit der Wellenlänge bzw. der Lichtfarbe des emittierten Lichtes des Objektes konfiguriert wird. In der Regel ist bei elektronischen Anzeigeelementen die Lichtfarbe des emittierten Lichtes bekannt, sodass diese von der elektronischen Steuerung erfragt und berücksichtigt werden kann. In der Praxis setzt sich das emittierte Licht aus unterschiedlichen Lichtfarben bzw. Lichtwellenlängen zusammen. In diesem Fall ist eine Gewichtung der einzelnen Lichtfarben bzw. Wellenlängen sinnvoll, um diese für die Konfiguration des Brechungsindexes unterschiedlich priorisieren zu können. Denkbar ist es, die höchste Gewichtung für die empfindlichste Farbe anzunehmen oder aber die Gewichtung so einzustellen, dass der Gesamtseheindruck optimiert wird.

Die Einstellung bzw. Anpassung des Brechungsindexes kann zeitgesteuert oder ereignisgetrieben erfolgen. Unter zeitgesteuert wird beispielsweise eine periodische Neubestimmung des erforderlichen Brechungsindexes verstanden. Als mögliches Ereignis zum Auslösen einer Neubestimmung des Abstandes zwischen Betrachter und Objekt kann beispielsweise eine festgestellte Bewegung des Betrachters bzw. eines von diesem mitgeführten Endgerätes verstanden werden. Denkbar ist auch die Feststellung einer Bewegung des Objektes selbst, d.h. des elektronischen Anzeigeelementes.

Auch ist es vorteilhaft, eine Neueinstellung des Brechungsindexes nicht für jede Abstandsänderung auszuführen. Dementsprechend ist es vorteilhaft, wenn eine minimale Abstandsänderung definiert wird, ab der eine Neueinstellung des Brechungsindexes erfolgt. Zur Vermeidung von Schwankungen des eingestellten Brechungsindexes aufgrund sich wiederholender Abstandsänderungen ist es sinnvoll, eine Hysterese-Schleife für die Neubestimmung des Brechungsindex zu implementieren.

Ferner ist es sinnvoll, wenigstens eine bereitstehende Kamera dafür zu nutzen, den Betrachter eines Objektes bzw. eines Darstellungsbereiches genauer zu analysieren. Insbesondere ist es vorteilhaft, wenn nicht nur der Abstand erfasst wird, sondern auch festgestellt wird, ob der Betrachter tatsächlich auf das Objekt bzw. den entsprechenden Darstellungsbereich blickt. Denn nur in diesem Fall ist es sinnvoll, den Brechungsindex tatsächlich anzupassen. Entsprechende Möglichkeiten bestehen durch etwaige Gesichtserkennungsalgorithmen, die auf Grundlage von Kamerabildern nicht nur einen Betrachter selbst identifizieren, sondern ebenfalls die Position der Augen bzw. deren Blickrichtung. Auf Grundlage dieser Informationen kann dann die entsprechende Einstellung des Brechungsindex erfolgen. Durch eine Gesichtserkennung können beispielsweise auch nutzerspezifische Profile mit nutzerspezifischen Referenzwerten für den Brechungsindex automatisch für unterschiedliche Nutzer eingestellt werden.

Denkbar ist es auch, dass ein eingestellter Brechungsindex beispielsweise dann zurückgesetzt wird, wenn der Betrachter nicht mehr auf das Objekt bzw. den Darstellungsbereich blickt bzw. für eine minimale Zeit nicht mehr auf den Betrachtungsbereich schaut. In diesem Fall kann es sinnvoll sein, den Brechungsindex auf einen neutralen Wert zurückzusetzen, der beispielsweise für Personen ohne Sehschwäche gilt.

Die technische Umsetzung der Ansteuerung des Materials mit variablem Brechungsindex ist abhängig von dessen Aufbau. Materialabhängig besteht die Möglichkeit, den Brechungsindex mittels einer Steuerspannung oder eines elektrischen Feldes zu variieren. Beispielsweise sind Materialien bekannt, deren anisotrope Eigenschaften eine Änderung des Brechungsindexes zu lassen. Durch Anlegen eines äußeren elektrischen Feldes kann hier eine Doppelbrechung erzeugt werden und demzufolge der Brechungsindex des Materials bezüglich der durchtretenden Lichtstrahlen variiert werden.

Das Material kann ebenfalls eine Linse umfassen, die mittels einer Piezokeramik mechanisch verformbar ist. Durch Anlegen einer Steuerspannung kann die durch die Keramik hervorgerufene Deformation der Linse genau eingestellt und dadurch der Brechungsindex variiert werden.

Darüber hinaus sind weitere Materialien aus dem Stand der Technik bekannt, die eine flexible Änderung ihres Brechungsindex zulassen. Beispielhaft wird auf die Druckschriften DE 10222151 B4, DE 10129443 B4, EP 0 977 077 A2, US 6,215,920 B1 verwiesen. Weitere geeignete Materalen werden in der Dissertation "Neue polymere Werkstoffe für ophthalmologische Implantate: Photoinduzierte Brechungsindexänderung und hochbrechende konkomitierend UV absorbierende Chromophore" von Martin Schraub, Universität Marburg, 2011 genannt. Die Inhalte der vorgenannten Druckschriften werden vollumfänglich zum Gegenstand dieser Anmeldung gemacht.

Neben dem erfindungsgemäßen Verfahren betrifft die vorliegende Erfindung ebenso ein Anzeigeelement, dessen Darstellungsbereich aus einem Material mit variablem Brechungsindex besteht, dieses umfasst oder von diesem umgeben ist. Daneben umfasst das Anzeigeelement eine elektronische Steuerung zur Einstellung des Brechungsindex. Diese elektronische Steuerung ist derart programmiert, sodass sie zur Ausführung des erfindungsgemäßen Verfahrens geeignet ist. Die Vorteile und Eigenschaften des Anzeigeelementes entsprechen offensichtlich denen des erfindungsgemäßen Verfahrens, weshalb an dieser Stelle auf eine erneute Erläuterung verzichtet wird.

Bei dem Anzeigeelement kann es sich beispielsweise um ein elektronisches Display handeln, dies ist jedoch nicht zwingend erforderlich. Das Material kann theoretisch auf allen sichtbaren Objekten angebracht bzw. in diese integriert werden, die eine Reflektion von Lichtstrahlen zulassen. Bspw. lässt sich jede Glas- oder Kunststoffscheibe mit einem geeigneten Material ausstatten, um die Lichtbrechung der durchtretenden Lichtstrahlen zu modifizieren. Es wird auf die vorteilhafte Anwendung der Erfindung bei Fenster- oder Windschutzscheiben, Schaukästen, etc. verwiesen.

Darüber hinaus betrifft die vorliegende Erfindung ein elektronisches Gerät, insbesondere ein Smartphone, Tablet, Fernseher, Computermonitor, Videowand, Wearable, eBook Reader, Armaturenbrett einer Maschine, insbesondere eines Fortbewegungsmittels, mit wenigstens einem Anzeigeelement gemäß der vorliegenden Erfindung. Darüber hinaus umfasst das elektronische Gerät eine passende Steuerung zur Ausführung des Verfahrens. Idealerweise ist wenigstens eine Abstandbestimmungsvorrichtung vorgesehen, insbesondere wenigstens eine Kamera oder alternativ ein Positionssensor und/oder Abstandssensor.

Die Anwendung der vorliegenden Erfindung bei Armaturenbrettern bietet den Vorteil, dass beim Wechsel des Blickes zwischen den durch die Windschutzscheibe betrachteten entfernten Objekten und einem nahen Display die Adaptionszeit für scharfes Sehen verringert wird. Bei älteren Menschen ist die Adaptionszeit typischerweise länger als bei jüngeren.

Damit ergeben sich sowohl für das Anzeigeelement, insbesondere das elektronische Anzeigeelement, als auch das elektronische Gerät dieselben Vorteile und Eigenschaften wie sie bereits vorstehend anhand des erfindungsgemäßen Verfahrens erläutert wurden. Auf eine wiederholende Beschreibung wird aus diesem Grund verzichtet.

Weitere Vorteile und Eigenschaften der Erfindung sollen im Folgenden anhand der in den Abbildungen gezeigten Ausführungsbeispiele näher erläutert werden. Es zeigen:

Figur 1:    eine schematische Skizze des erfindungsgemäßen Systems mit einem elektronischen Anzeigeelement und einer optischen Vorrichtung zur Korrektur der physiologischen Akkommodation des Betrachters;

Figur 2:    ein Beispiel für mögliche Referenztabellen der elektronischen Steuerung zur Einstellung des Brechungsindex und

Figur 3:    ein Ablaufdiagramm des erfindungsgemäßen Verfahrens.

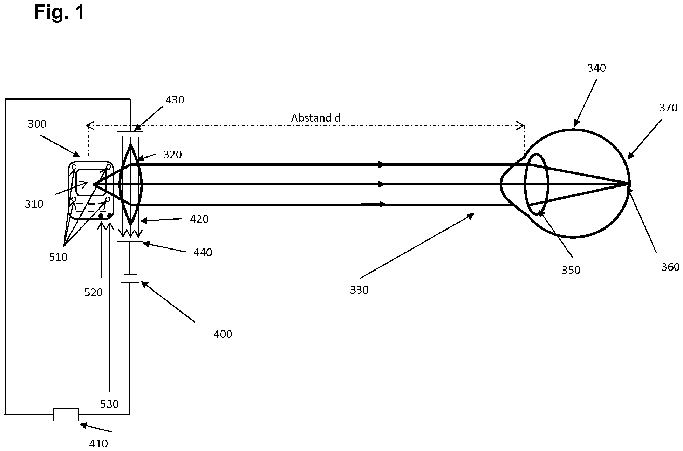

Die vorliegende Erfindung basiert auf der neuartigen Idee, die bekannte Funktion einer Sehhilfe auf die Lichtquelle, in einem konkreten Ausführungsbeispiel auf das Display eines Smartphones, zu verlagern. Figur 1 zeigt eine schematische Darstellung dieser optischen Lösung. Dabei sendet ein Smartphone 300 von dessen Display 310 Lichtstrahlen aus, die auf eine optische Vorrichtung 320 treffen, z.B. ein geeignetes transparentes Material, dessen Brechungsindex durch eine Steuerung des Smartphones 300 elektronisch einstellbar ist. Dies kann eine Linse mit steuerbarem Brechungsindex n sein. Die nachfolgenden Ausführungen gelten jedoch auch für den Fall, dass die optische Vorrichtung 320 auf ein beliebiges elektronisches Anzeigeelement, wie Computermonitore, elektrische Armaturen, Fernseher, etc. aufgebracht oder in dieses integriert ist. Auch kann die Funktion und das erfindungsgemäße Verfahren dann vorteilhaft ausgenutzt werden, wenn die optische Vorrichtung auf eine Glas- oder Kunststoffscheibe aufgebracht ist. Der Einfachheit halber wird nachfolgend jedoch vorwiegend von einem Smartphone-Display 310 gesprochen.

Die Steuerung des Brechungsindexes in Abhängigkeit von dem über die integrierte Kamera 510 bestimmten Abstand zum Auge ist ein besonderer Punkt dieser Erfindung und wird in den nächsten Abschnitten ausführlicher beschrieben. Von der optischen Vorrichtung 320 gebrochen treffen die Lichtstrahlen 330 am Auge 340 des Betrachters auf. Dort werden sie von der Augenlinse 350 erneut gebrochen. Durch die Steuerung der optischen Vorrichtung 320 sollen die Lichtstrahlen im Gesamtlinsensystem, bestehend aus der optischen Vorrichtung 320 und der Linse im menschlichen Auge 350 so gebrochen werden, dass der Brennpunkt 360 wieder auf der Netzhaut 370 liegt und ein scharfer Seheindruck entsteht. Der wesentliche Punkt ist die Steuerung des Brechungsindexes n der optischen Vorrichtung 320 auf dem Display 310, so dass der Strahlengang derart verändert wird, dass die beim weitsichtigen Auge nicht mehr ausreichende Krümmung der Augenlinse 350 kompensiert wird, d.h. die Ablenkung der Lichtstrahlen durch die Kombination beider Linsen 320, 350 muss im Auge 340 den Brennpunkt 360 auf die Netzhaut 370 führen.

Steuerung des Brechungsindexes

Zur Steuerung des Brechungsindexes sollen die physikalischen Eigenschaften bestimmter Materialien ausgenutzt werden. Das für die optische Vorrichtung 320 verwendete Material soll dabei so beschaffen sein, dass dessen Brechungsindex nahezu trägheitsfrei angepasst werden kann.

In der gezeigten Ausführungsform gemäß Figur 1 soll die Änderung des Brechungsindexes der optischen Vorrichtung 320 in Abhängigkeit eines äußeren elektrischen Feldes gesteuert werden. Als Kerr-Effekt wird die elektrooptische Erscheinung bezeichnet, gemäß dieser elektrische Felder in isotropen Stoffen aller Aggregatszustände Doppelbrechung erzeugen. Dies tritt besonders stark bei Nitrobenzol und Nitrotoluol in Erscheinung. Zwischen zwei gekreuzten Polarisationsfiltern befinde sich der isotrope Stoff im elektrischen Feld eines Kondensators. Unter dem Einfluss des elektrischen Feldes wird der Stoff doppelbrechend und es ändert sich die Brechzahl n. Für die entstehende Differenz gilt: DELTA(n) ist proportional zu LAMBDA $* E^2$, wobei LAMBDA die Wellenlänge des Lichts und E die elektrische Feldstärke repräsentieren. Die Änderung erfolgt praktisch trägheitslos und Frequenzen von mehr als 100.000.000 Hz sind möglich.

In Figur 1 ist hier eine variable Spannungsquelle 400 sowie ein elektrischer Widerstand 410 dargestellt, über die das elektrische Feld 420 zwischen zwei Kondensatorplatten 430, 440 variiert werden kann. Die optische Vorrichtung 320 ist dabei so platziert, dass sie im Bereich des erzeugten elektrischen Feldes liegt.

Alternativ könnte der Brechungsindex der optischen Vorrichtung 320 auch über eine Piezokeramik gesteuert werden. In Abhängigkeit der angelegten Steuerspannung werden die Ladungsträger in der Keramik stärker oder weniger stark verschoben, wodurch eine mechanische Deformation der Keramik erfolgt. Durch diese mechanische Deformation kann z.B. eine Änderung der Krümmung erreicht und der Brechungsindex variiert werden.

Diese optische Vorrichtung kann beispielsweise als auf das Display 310 aufgedampfte Folie realisiert werden oder als zusätzliche molekulare Schicht in Form von Nanokristallen, die auf das Display 310 aufgesputtert werden und für die die Materialeigenschaften zur Änderung des Brechungsindex steuerbar sind.

Aus dem Stand der Technik sind weitere geeignete Materialien und Verfahren zur Einstellung des Brechungsindex bekannt.

Aus dem Dokument "Eberhard Ritzhaupt-Kleissl, "Transparente Polymer-Nanokomposite für Anwendungen in der Mikrooptik", Dissertation zur Erlangung des Doktorgrades der Ingenieurwissenschaften an der Fakultät für Angewandte Wissenschaften der Universität Freiburg im Breisgau, 2006, 34 ist es bekannt, dass der Brechungsindex eines elektrooptischen Materials eine Funktion des externen elektrischen Feldes ist und dass der Brechungsindex durch geeignete Wahl der Dotierstoffe beeinflusst werden kann.

Die Patentschrift DE10222151B4 beschreibt ein variables optisches Dämpfungselement. In der allgemeinsten Form besteht die Erfindung aus einem planaren Wellenleiter, der einen Abschnitt aufweist, welcher zumindest teilweise von einem Material mit veränderbarem Brechungsindex umgeben ist, das in mindestens einem definierten Bereich auf beiden Seiten des Wellenleiters angeordnet und dreieckförmig ausgebildet ist und sich in Ausbreitungsrichtung des Lichts aufweitet. Dadurch wird das Licht symmetrisch auf beiden Seiten aus dem Wellenleiter heraus gekoppelt, wodurch eine hohe Dämpfung erzielt werden kann. Das Material mit veränderlichem Brechungsindex ist vorzugsweise ein Polymer, dessen Brechungsindex aufgrund thermooptischer, elektrooptischer oder anderer Eigenschaften veränderbar ist. Alternativ können zur Erzielung eines elektrooptischen Effekts mindestens zwei Elektroden vorgesehen sein, die im Bereich um den Wellenleiter ein elektrisches Feld erzeugen. Eine weitere Möglichkeit stellt die Verwendung optischer Polymere dar, deren Brechzahl direkt durch Bestrahlung mit Licht einer bestimmten Wellenlänge verändert werden kann.

Die Patentschrift DE 10129443 B4 beschreibt eine Beleuchtungsvorrichtung mit einer Wellenleiterplatte und einer an der Wellenleiterplatte angeordneten Folie, wobei der Brechungsindex der Folie, vorzugsweise der Realteil des Brechungsindexes veränderbar ist.

Aus der Patentanmeldung EP 0 977 077 A2 ist eine optische Vorrichtung bekannt, bei der an einer flächigen Seitenfläche einer Wellenleiterplatte in die Licht einer Lichtquelle eingekoppelt wird, eine Flüssigkristallanzeige aufgebracht oder in Dünnschichttechnologie aufstrukturiert ist. Durch das Anlegen eines elektrischen Feldes an den eingebrachten Flüssigkristallen kann der Brechungsindex dieser Schicht bzw. in der Flüssigkristallzelle derart verändert werden, dass eine Lichtauskopplung aus der Wellenleiterplatte beeinflusst wird.

Aus der US 6,215,920 B1 ist ein reflektives Display bekannt, bei der aus einer Wellenleiterplatte Licht über eine Prismenstrukturierung ausgekoppelt und von einem Reflektor reflektiert wird, bei dem ein strukturiertes elektrophoretisches Material auf einem transparenten Träger aufgebracht ist.

Eines der Hauptziele der Dissertation *Martin Schraub*, "*Neue polymere Werkstoffe für ophthalmologische Implantate: Photoinduzierte Brechungsindexänderung und hochbrechende konkomitierend UV absorbierende Chromophore*", *Dissertation zur Erlangung des Doktorgrades der Naturwissenschaften (Dr. rer. nat.) aus dem Fachbereich Chemie der Philipps-Universität Marburg, 2011"* war es, Materialien für die Herstellung von Intraokularlinsen (IOL) zu synthetisieren, mit denen es möglich ist, postoperativ und non-invasiv die Brechkraft der IOL zu ändern. Erreicht werden sollte dieses Ziel durch Verwendung von photochemisch aktiven Gruppen wie Cumarinen, Stilbenen und Chalkonen. Diese Substanzklassen reagieren auf bestimmte Wellenlängen indem sie in einer $[2\pi+2\pi]$-Cycloaddition dimerisieren. Durch die Dimerisierung wird das konjugierte $\pi$-Elektronensystem verkürzt, dadurch wiederum ändert sich die Polarisierbarkeit des Moleküls. Weiterführende theoretische Betrachtungen zeigen, dass der Brechungsindex eines Materials von der Polarisierbarkeit abhängt. Somit ist es möglich, durch photochemische Manipulation auf mikroskopischer Ebene, makroskopisch den Brechungsindex eines Materials zu ändern.

Erfassen von Referenzpunkten für den Brechungsindex der optischen Vorrichtung

Wie stark ein aus dem Display austretender Lichtstrahl an der optischen Vorrichtung 320 gebrochen werden soll, damit der Brennpunkt der Lichtstrahlen 360 auf der Netzhaut 370 des Betrachters liegt, hängt von der Art seiner Fehlsichtigkeit, aber auch vom Abstand d zwischen dem Display 310 und dem Auge 340 ab. Unterschiedliche Einflussfaktoren, einschließlich des Abstandes d, sollen durch subjektive Schärfe-Bestimmungen an einzelnen Referenzpunkten ermittelt werden.

Zur Bestimmung des Abstandes d zwischen dem Display 310 und dem Auge 340 soll die Fokussier-Funktion einer am Smartphone 300 integrierten Kamera 510 verwendet werden. Vorteilhafterweise sind mehrere Kameras 510 am Smartphone 300 integriert und das Smartphone 300 verfügt über Algorithmen zur Ermittlung des Abstandes eines Objekts 340 von der Kamera 510, die gemäß Stand der Technik zur Fokussierung verwendet werden. Gemäß dem Stand der Technik verfügen Kameras 510 auch über Algorithmen zur Erkennung von Gesichtern und fokussieren nach Möglichkeit auf das Auge 340 des erfassten Gesichts. Diese Funktionalitäten sollen verwendet werden, um den Abstand zwischen Kamera 510 und Auge 340 des Bedieners zu bestimmen. Über geometrische Korrekturterme soll aus dem Abstand d zwischen Kamera 510 und Auge 340 der Abstand d zwischen Display 310 und Auge 340 berechnet werden. Für die Anordnung der Kameras 510 an bislang üblichen Smartphones 300 und einem typischen Abstand des Smartphones 300 vom Auge 340 von ca. 20 cm - 50 cm sind diese Korrekturen gering.

Vorzugsweise über eine menügesteuerte Anzeige soll der Teilnehmer aufgefordert werden, die Schärfe an unterschiedlichen Referenzpunkten subjektiv zu beurteilen. Die erste Referenzmessung wird beispielsweise bei ausgestrecktem Arm durchgeführt. Dazu wird mit Hilfe einer Kamera 510 der Abstand zwischen Display 310 und Auge 340 berechnet. Über einen vorzugsweise menügesteuerten Regler R 520 am Smartphone 300 kann der Teilnehmer den Brechungsindex variieren und über einen weiteren Bestätigungsschalter S 530 diejenige Reglerstellung R bestätigen, die für ihn das subjektiv am schärfsten empfundene Displaybild ergibt. Die Änderung des Brechungsindexes des für die optische Vorrichtung 320 verwendeten Materials soll dazu beispielsweise durch die Änderung einer äußeren Spannung 400 und damit durch die Änderung des elektrischen Feldes 420 erfolgen. Vorzugsweise werden, durch einen Algorithmus gesteuert, bestimmte Folgen von Brechungsindizes durchlaufen und bei Änderung des Reglers R die Schrittweite für eine Feinjustierung angepasst. Der Brechungsindex soll in verschiedenen Ebenen variiert werden, so dass sphärische und zylindrische Abweichungen von einer idealen Sehstärke erfasst werden können.

Ist die Sehstärke auf beiden Augen unterschiedlich, so kann die Einstellung vorzugsweise für das dominante Auge vorgenommen werden. Eine getrennte Optimierung für beide Augen ist mit dem zugrunde liegenden Verfahren nicht möglich, eine Gesamtoptimierung des Seheindrucks dagegen schon.

Für jeden Referenzpunkt sollen der über die Kamera 510 erfasste und berechnete Abstand d zwischen Display 310 und Auge 340 sowie die durch den Teilnehmer subjektiv festgelegten Brechungsindizes im Speicher des Smartphones 300 abgelegt werden.

Anschließend soll der Teilnehmer vorzugsweise menügesteuert oder anhand eines am Display 310 abgespielten Anleitungs-Videos aufgefordert werden, den Abstand d zwischen Display 310 und Auge 340 zu verringern und eine weitere Referenzmessung durchzuführen, deren Messwerte ebenso abgespeichert werden.

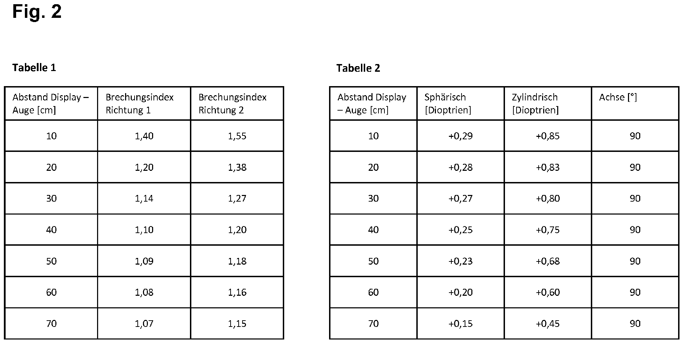

Insgesamt sollen mehrere Referenzmessungen bei unterschiedlichen Abständen d durchgeführt werden und beispielsweise in einer im Smartphone 300 integrierten Datenbank gespeichert werden. Tabelle 1 in Figur 2 zeigt ein Beispiel für die über das Smartphone 300 erfassten und als Tabelle abgelegten Referenzpunkte. Alternativ können auch die von einem Augenarzt oder Optiker typischerweise in Dioptrien erfassten Werte gespeichert und umgerechnet werden.

Personalisierung der optischen Korrekturwerte

Durch diese Referenzmessungen ist die Schärferegelung personalisiert. Die aus der Tabelle 1 der Figur 2 abgelesenen Referenzpunkte für Abstand d und Brechungsindizes sind der Person zugeordnet, für die diese Punkte aufgenommen wurden. Verschiedene Profile sollen erstellt werden können, um Personalisierungen auch für andere Personen erfassen zu können und bei Weiterreichen des Smartphones 300 die für diese zweite Person aufgenommenen Referenzpunkte verwenden zu können.

Durch die Personalisierung der Brechungsindizes erscheint das Display 310 für Personen mit einer anderen Sehstärke als unscharf. Dies hat bei engem Raum, z.B. im Aufzug oder in öffentlichen Verkehrsmitteln auch den Vorteil, dass die am Display 310 dargestellte Information den anderen Personen mehr oder weniger verborgen bleibt. Ein Schutz vor ungewolltem Einblick wurde bislang durch Anbringen von Polarisationsfolien an das Display eines Laptops erreicht.

Speicherbare Profile

Es sollen auch für eine Person unterschiedliche Profile erstellt werden können, z.B. eines für Tageslichtumgebung und eines für Kunstlichtumgebung, für unterschiedliche Display-Arten, Display-Hintergrundfarben, Tages- und Nachtzeiten oder für unterschiedliche Temperaturen.

Über verschiedene Profile sollen die personalisierten optischen Korrekturen auch für andere Teilnehmer abgespeichert und aufgerufen werden können. Eines dieser Profile soll auch eine Rücksetzung der Brechungsindizes auf die Neutralstellung ermöglichen, so dass für einen normalsichtigen Teilnehmer der Strahlengang unverändert bleibt. In einem weiteren Profil soll die Schärfekorrektur für einen anderen Abstand abgespeichert sein, z.B. für das Aufbewahren der digitalen Uhr nachts neben dem Bett.

Importieren und Exportieren von optischen Korrekturwerten

In einer weiteren Ausprägung des Verfahrens sollen vom Augenarzt oder Optiker berechnete Werte eingelesen und anstelle der Referenzmessungen verwendet werden können. Das Einlesen erfolgt vorzugsweise über eine Datenverbindung, die zwischen dem vom Augenarzt oder Optiker verwendeten Gerät und dem Smartphone 300 aufgebaut wird.

Ebenso ist ein Export der aus subjektiven Messungen durchgeführten Brechungsindizes und zugehörigem Abstand möglich, um beispielsweise diese personalisierten Messdaten an ein weiteres Display übertragen zu können. An diesem weiteren Display brauchen dann keine eigenen Messwerte aufgenommen zu werden. Sollte dieses zweite Display über keine Kamera oder andere Möglichkeit verfügen, den Abstand zwischen Display und Betrachter zu ermitteln, können auch die Messwerte für nur einen einzigen Referenzpunkt übergeben werden. Die definierten Brechungsindizes gelten dann für diesen einen festen Abstand.

In einer weiteren Ausprägung dieser Erfindung soll im Nahfeld eines Displays, bspw. Fernseher oder Monitor, durch ein mitgeführtes Gerät des Nutzers, bspw. ein Smartphone, eine Datenverbindung zur Steuereinheit des Displays aufgebaut werden können und die personalisierten optischen Korrekturwerte an die Display-Steuerung übergeben werden können. Diese sollen dann temporär durch das Display verwendet werden, um den Strahlengang entsprechend der Korrekturvorgaben des Nutzers zu beeinflussen. Dies soll ähnlich der heute verwendeten Bezahlungsmöglichkeiten über Near Field Communication realisiert werden.

In einer weiteren Ausprägung ist eine Smartphone-Applikation (App) vorgesehen, über die die in dieser Routine ermittelten optischen Korrekturwerte mit den zugehörigen Abstandswerten an eine dritte Person oder an ein Gerät übertragen werden können. Ein Anwendungsfall ist beispielsweise die Übertragung dieser Daten zu einem Optiker, der diese Daten zur Brillenanfertigung oder als Unterstützung dessen verwenden kann.

In einer weiteren Variante sollen auch ganze Fensterscheiben oder Windschutzscheiben mit einer optisch steuerbaren Folie überzogen werden. Dadurch kann eine scharfe Sicht für einen speziellen Benutzer ermöglicht werden, während für alle anderen Teilnehmer ohne Sehschwäche eine Unschärfe vorliegt.

Automatische Anpassung der Brechungsindizes während des Betrachtens des Displays

Eine einmal erstellte personalisierte Referenztabelle kann beibehalten werden, bis ein Teilnehmer erneute Änderungen z.B. wegen einer fortschreitenden Weitsichtigkeit, vornimmt. Kleinere Korrekturen aufgrund der Abhängigkeit des Brechungsindexes von der Temperatur und vom Luftdruck beim Übergang zu Luft können vorgenommen werden, falls erforderlich.

Da die Brechung von der Wellenlänge abhängt, soll in einer weiteren Ausprägung dieser Erfindung der Brechungsindex nicht nur in Abhängigkeit des Abstandes zwischen Display und Auge, sondern auch von der Wellenlänge des emittierten Lichtes gesteuert werden. Die Farbe des Lichts ist bei der Ansteuerung des Displays bekannt. Über in Tabellen gespeicherte Werte soll eine Umrechnung von Lichtfarbe auf Wellenlänge erfolgen. In einer weiteren Umrechnung soll für die jeweilige Wellenlänge der Unterschied des Brechungsindexes für das verwendete Material in Bezug auf eine Referenzwellenläge ermittelt werden, die für die Referenzmessungen verwendet wurde. Da bei Farbdisplays in der Regel Licht verschiedener Wellenlänge gleichzeitig emittiert wird, kann eine Gewichtung auf die empfindlichste Farbe oder eine Optimierung des Gesamtseheindrucks erfolgen.

Nach Einschalten des Smartphones soll erst nach manueller Aktivierung die Umstellung auf eine Anpassung der optischen Vorrichtung erfolgen. Sobald diese verwendet wird soll fortlaufend der Abstand zwischen Display und Auge berechnet werden und aus den in der Tabelle abgelegten Referenzwerten die Brechungsindizes abgelesen werden. Durch geeignete Interpolation oder numerische Approximationsverfahren sollen aus den durch die Referenzmessungen erfassten Stützstellen kontinuierliche Werte ausgegeben werden können, d.h. auch Brechungsindizes zwischen diesen Stützstellen berechnet werden. Bei Änderung des Abstandes erfährt der Teilnehmer diese Nachführung dann als lückenlos.

Die Anpassung der Brechungsindizes der optischen Vorrichtung soll kontinuierlich erfolgen, d.h. auch für einen sich bewegenden Teilnehmer soll bei sich änderndem Abstand zum Display die Brechung der vom Display emittierten Lichtstrahlen stets nachgeführt werden.

Anwendungsbereiche

Das der Erfindung zugrunde liegende Verfahren kann für eine Vielzahl von Display-Arten verwendet werden und zwar genau dann, wenn das Ablesen des Displays auf eine bestimmte Sehstärke und damit in der Regel auf eine Person bezogen ist. Weitere Anwendungen sind Displays von Armbanduhren oder Anzeigen am Armaturenbrett eines Fortbewegungsmittels, z.B. eines Autos. Da Armbanduhren in der Regel über keine Kamera verfügen, soll die personalisierte Schärfekorrektur hierbei für eine typische Entfernung zwischen Auge und Uhr am Arm eingestellt werden.

Bei einer Anwendung am Armaturenbrett ist dagegen die Anbringung von Kameras problemlos möglich. So wie gemäß Stand der Technik die Sitzeinstellung einem bestimmten Personenprofil zugeordnet werden kann, das über den personalisierten Schlüssel bzw. die Zugangskennung automatisch aktiviert wird, soll auch die Schärfekorrektur einem Personenprofil zugeteilt werden. Dabei muss sichergestellt werden, dass es bei einem Fahrerwechsel wieder deaktiviert wird, um ungewollte Unschärfe für einen anderen Fahrer zu verhindern.

Im Weiteren ist der Einsatz dieses Verfahrens auch für Displays möglich, die von mehreren Personen betrachtet werden und nur temporär personalisiert werden sollen. Ein Beispiel hierfür ist die Anzeige an Haltestellen von öffentlichen Verkehrsmitteln oder Informationsanzeigen. Hierbei sollen durch eine Datenverbindung des Smartphones eines Teilnehmers mit der Steuerung der Schärfekorrektur des Displays die teilnehmerspezifischen Schärfekorrekturdaten an die Steuerung des Displays übermittelt werden. Daraufhin soll temporär die Schärfekorrektur für diesen Teilnehmer und seinem Abstand zum Display aktiviert werden. Abstandsberechnungen zwischen Display und Teilnehmer sollen vorzugsweise über die an den jeweiligen Geräten separat durchführbaren Ortsbestimmungen, z.B. über Global Positioning System (GPS), erfolgen. Nach Entfernen des Teilnehmers oder Ablauf eines Timers soll die Schärfekorrektur wieder zurückgesetzt werden. Dabei soll die Verbindung zwischen dem Smartphone und der Displaysteuerung vorzugsweise über eine Datenverbindung einer Mobilfunktechnologie, z.B. Global System for Mobile Communications (GSM) / Enhanced Data Rates for GSM Evolution (EDGE), Universal Mobile Telecommunications System (UMTS) / High Speed Packet Access (HSPA), Long Term Evolution (LTE), LTE Advanced (LTE-A), Code Division Multiple Access (CDMA), WiFi, Worldwide Interoperability for Microwave Access (WiMAX), Wireless Local Area Network (WLAN) oder der 5. Generation (5G) erfolgen. Alternativ kann die Verbindung anstelle einer zentralisierten Netztechnologie, auch über eine direkte Point-to-Point Verbindung über Radio-Frequency Identification (RFID), BlueTooth, Infrarot, Quick Response (QR) Code oder den Barcode erfolgen.

Bei eBooks erfolgt häufig mit der Bewegung des Lesers eine Änderung des Abstandes zu den Augen. Um auch ohne Kamera und Abstandsmessung die Sehschärfe über die hier vorgeschlagene optische Methode anzupassen, soll am Rahmen des eBooks ein Drehregler zur manuellen Korrektur angebracht werden.

Mehrere Kameras

Um den Abstand zwischen Augen und Display verlässlich zu berechnen, sollen vorzugsweise mehrere Kameras am Display angebracht werden. Diese haben den Zweck, sich für die Abstandsmessung z.B. über Triangulation, gegenseitig zu unterstützen.

Durch mehrere Kameras soll auch den Bewegungen der Augen besser gefolgt werden können. Über einen speziellen Algorithmus soll erkannt werden, ob die Augen den Bereich des Displays verlassen. In diesem Fall soll die zuletzt verwendete Schärfekorrektur beibehalten werden, solange das Gerät mit dem Display nicht wesentlich in ihrer Position verändert wird. Wird dagegen erkannt, dass die Augen den Displayrand verlassen oder wird über einen integrierten Bewegungssensor erkannt, dass das eBook weggelegt wird und die Kameraerkennung zudem kein Gesicht erkennt, soll nach Ablauf eines einstellbaren Timers die Schärfekorrektur wieder in die Neutralstellung gebracht werden. Dies ermöglicht beispielsweise, dass die Schärfekorrektur auf die Neutralstellung zurückgesetzt wird, wenn ein Benutzer das eBook auf einen Tisch legt und momentan nicht verwendet. Die Verwendung eines Exponentialfilters zur Vermeidung eines abrupten Umschaltens ist in der Beschreibung der "Prozedur beim Weglegen des Smartphones oder beim Schließen des Auges" beschrieben.

## Lupenfunktion

Gemäß des Stands der Technik gibt es softwaregesteuerte Lupenfunktionen für Displays, die diejenige Stellen vergrößert darstellen, an denen sich momentan der Cursor befindet.

In einer optionalen Form der vorliegenden Erfindung soll am Display eine vergrößerte Darstellung desjenigen Teilbereiches möglich sein, auf den beide Augen momentan gerichtet sind. Idealerweise wird diese Lupenfunktion über einen Druckknopf am Smartphone oder eBook aktiviert und wieder deaktiviert. Im aktivierten Zustand soll durch die einzelnen Kameras nicht nur der Abstand der Augen zum Display berechnet werden, sondern auch derjenige Teilbereich des Displays identifiziert werden, auf den das Auge gerade schaut. Bei Fortbewegen der Augen soll der vergrößert dargestellte Bereich nachgezogen werden. Über eine Einstellmöglichkeit soll die Größe des um den vom Auge fokussierten Bereichs variiert werden können. Dies kann beispielsweise die gerade gelesene Zeile in einem eBook sein, oder ein größerer Gesamtbereich des Displays eines Smartphones.

## Algorithmus

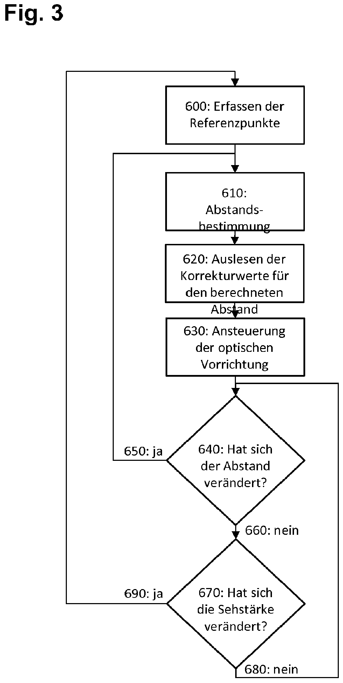

Figur 3 veranschaulicht den der Erfindung zugrunde liegenden Algorithmus. Im Prozess 600 werden die Referenzpunkte erfasst. Über ein Menü gesteuert soll der Teilnehmer aufgefordert werden, für verschiedene Abstandspunkte zwischen Display und Auge die für ihn am besten geeignete Schärfekorrektur zu ermitteln. Die zu einem Abstandspunkt gehörigen Korrekturwerte sollen in einer datenbankähnlichen Struktur abgelegt werden wie in Figur 2 dargestellt. Zwischen den jeweiligen Referenzpunkten sollen Interpolationen oder numerische Approximationen der Korrekturwerte durchgeführt werden, so dass die optischen Korrekturwerte als kontinuierliche Werte in Abhängigkeit des Abstandes zur Verfügung stehen. Der Prozess 600 in Figur 3 erfolgt einmalig für eine bestimmte Person und wird erst wiederholt, wenn sich die Sehstärke dieser Person ändert oder wenn weitere Daten für diese oder eine weitere Person aufgenommen werden sollen, die in einem separaten Profil abgespeichert werden.

Über eine Eingaberoutine soll innerhalb des Prozesses 600 vom Benutzer angegeben werden, welches sein dominantes Auge ist, d.h. ob die optische Korrektur auf das rechte oder linke Auge ausgerichtet sein soll.

Die darauffolgenden Prozesse finden in kurzen Zeiträumen während des Betrachtens des Displays statt. Der Prozess 610 beinhaltet die Abstandsbestimmung.

Hierzu zählt die Erfassung des Abstandes zwischen Kamera und Auge über eine oder mehrere Kameras und die Umrechnung auf den Abstand zwischen Display und Auge durch von der Geometrie des Gerätes abhängige Korrekturterme.

Der anschließende Prozess 620 kombiniert Daten aus den Prozessen 600 und 610. Für den in Prozess 610 berechneten Abstand werden die in Prozess 600 erfassten und durch Interpolation bzw. numerischer Approximation hinterlegten optischen Korrekturwerte ausgelesen.

In Prozess 630 werden die ausgelesenen optischen Korrekturwerte an die Ansteuerungseinheit der optischen Vorrichtung übergeben, die anhand dieser Vorgaben eine Änderung des optischen Strahlengangs bewirkt, z.B. eine elektronisch gesteuerte Änderung des Brechungsindexes der optischen Vorrichtung.

Um auf Bewegungen zu reagieren wird in der Abfrage 640 in regelmäßigen Abständen oder ereignisgetrieben überprüft, ob sich der Abstand zwischen dem Display und dem Auge des Betrachters verändert hat. Vorzugsweise soll hier der Abstand zum dominanten Auge des Betrachters analysiert werden. Über die für die Kamera verwendete Gesichtserkennung und Augenerkennung soll das entsprechende Auge in den Prozessen 610 und 640 ausgewählt werden. In der Regel sind Unterschiede der Abstände zwischen dem Display und dem einen oder anderen Auge aber für die Anwendung unerheblich und können vernachlässigt werden.

Überschreitet die relative Änderung des Abstandes einen Schwellwert x, d.h.

$$\frac{|d_{neu} - d_{alt}|}{d_{alt}} > x$$

so wird eine Abstandsänderung als relevant betrachtet 650 und es werden die für die neuen Abstandswerte 610 gültigen optischen Korrekturwerte 620 ausgelesen und die optische Vorrichtung mit diesen neuen Werten angesteuert 630. Als $d_{alt}$ sei der bisher für die optische Korrektur zugrunde liegende alte Abstandswert definiert. Der neue Abstand wird als $d_{neu}$ bezeichnet.

Hat sich in Abfrage 640 der Abstand nicht relevant verändert (660), d.h.

$$\frac{|d_{neu} - d_{alt}|}{d_{alt}} \leq x,$$

soll in der Abfrage 670 überprüft werden, ob sich die Sehstärke des Teilnehmers verändert hat. Diese Abfrage wird aufgrund des langen zeitlichen Abstandes zwischen einer Veränderung der Sehstärke in der Regel verneint 680. In diesem Fall wird zeitgesteuert oder durch ein Ereignis getrieben (z.B. über den Bewegungssensor erfasstes Bewegen des Smartphones) erneut überprüft, ob sich der Abstand zwischen Display und Auge relevant verändert hat 640.

Um zu häufige Änderungen des Brechungsindexes zu vermeiden, soll eine Hysterese HYST eingeführt werden. Die Änderung des Brechungsindexes in die entgegengesetzte Richtung soll erst erfolgen, wenn die relative Änderung den Wert x + HYST überschritten hat.

In Abfrage 670 wird eine Änderung der Sehstärke dadurch erkannt, dass der Teilnehmer versucht, die optische Korrektur manuell zu beeinflussen. In diesem Fall 690 soll der Teilnehmer über ein Auswahlmenü gefragt werden, ob die für bestimmte Referenzpunkte durchzuführende Schärfekorrekturmessungen 600 erneut durchgeführt werden sollen.

Prozedur beim Weglegen des Smartphones oder beim Schließen des Auges

Sollte ein Auge vom Anwender geschlossen werden, so soll das andere Auge als Zielpunkt für die Abstandsmessung verwendet werden. Sollten vorübergehend beide Augen geschlossen werden oder über den Bewegungssensor bzw. Kameras erkannt werden, dass das Smartphone beiseitegelegt wurde, so soll der zuletzt verwendete Abstand zunächst beibehalten werden. Vorzugsweise über einen Exponentialfilter sollen in diesem Fall die für den aktuellen Abstand verwendeten optischen Korrekturwerte schrittweise auf die Neutralstellung zurückgeführt werden, d.h. keine erzwungene Ablenkung des Strahlengangs erfolgen. Dazu soll als Ausgabewert (Filter-Output) zum Zeitpunkt t der momentan verwendete optische Korrekturwert verwendet werden und als aktueller Eingabewert (Filter-Input) zur Berechnung des neuen Ausgabewertes zum Zeitpunkt t+1 der Neutralwert verwendet werden. Die Gewichtungsfaktoren für den Ausgabewert zum Zeitpunkt t und Eingabewert zum Zeitpunkt t+1 sollen z.B. mit 0,3 und 0,7 so gewählt werden, dass die optische Vorrichtung schnell zur Neutralstellung zurückkehrt.

Wird das Smartphone ausgeschaltet, so soll beim erneuten Einschalten die optische Korrektur zunächst auf die Neutralstellung gesetzt werden und dem Teilnehmer über ein Auswahlmenü die Möglichkeit gegeben werden, die Schärfekorrektur zu aktivieren. Wird diese aktiviert, so soll die für den Teilnehmer personalisierte optische Korrektur ab Prozess 610 beginnen.

Software-gestütztes Verfahren

In einer weiteren Ausprägung dieser Erfindung soll die optische Vorrichtung ersetzt werden durch eine software-gesteuerte Ansteuerung des Displays. Das Ziel soll dasselbe sein, nämlich die Ablenkung der vom Display ausgesandten Lichtstrahlen direkt an ihrer Quelle. Dadurch soll erreicht werden, dass die Lichtstrahlen am menschlichen Auge so eintreffen, dass die Linse des Auges eines weitsichtigen Menschen ausreicht, um die Lichtstrahlen so zu brechen, dass sich der Brennpunkt auf dessen Netzhaut befindet und dadurch ein scharfer Seheindruck entsteht.

Dabei soll jedes Pixel des Displays so angesteuert werden, dass dessen Lichtstrahl abgelenkt wird. Dies kann durch Änderung der Brechungseigenschaften des umgebenden Materials erfolgen. Eine alternative Realisierungsvariante liegt in der bewussten Erzeugung von konstruktiver und destruktiver Interferenz, um die Ausbreitung der Lichtstrahlen gesteuert zu beeinflussen.

Erfinderische Schritte

Die Erfindung beschreibt ein softwaregesteuertes Verfahren zur Anpassung des Strahlenganges des von Displays ausgesandten Lichts, mit dem Ziel dass ein Benutzer mit Sehschwäche das Display auch ohne zusätzliche Sehhilfe scharf sehen kann, dadurch gekennzeichnet, dass:

- Die optische Korrektur direkt an der Lichtquelle vorgenommen wird.

- Die Ablenkung des Strahlengangs in Abhängigkeit vom Abstand des Auges des Betrachters zum Display erfolgt.

- Die Kombination aus Abstandsmessung und Steuerung des Brechungsindexes einer optischen Vorrichtung dazu verwendet wird, einen scharfen Seheindruck des Displays zu erreichen.

- Das Ziel darin besteht, dass der Strahlengang eines am Display erzeugten Lichtstrahls bereits an der Lichtquelle abgelenkt wird, so dass sich durch die Kombination aller Linsensysteme der Brennpunkt auf oder nahe der Netzhaut des Auges befindet und somit ein scharfer Seheindruck entsteht.

- Physikalische oder chemische Materialeigenschaften ausgenutzt werden, um die Ablenkung des Strahlengangs zu steuern.

- Die Änderung des Strahlengangs auch durch softwareseitige Ansteuerung jedes Pixels eines Display erfolgen kann.

- Der Abstand zwischen dem Display und dem menschlichen Auge mit Hilfe der am bzw. neben dem Display integrierten Kamera und einer entsprechenden Umrechnung erfolgt.

- Für die Erfassung des Abstandes zwischen dem Display und dem Auge eine oder mehrere Kameras verwendet werden.

- Der Abstand kontinuierlich gemessen wird.

- Nach Änderung des Abstandes zwischen Display und Auge eine Änderung des Brechungsindexes der optischen Vorrichtung durchgeführt wird.

- Die Kameras die Bewegungen der Augen erfassen und die Abstandsberechnung für den von den Augen am Display fokussierten Bereich durchführen.

- Ein Schwellwert eingeführt wird und erst nach Überschreiten der relativen Abstandsänderung dieses Schwellwertes eine Änderung des Brechungsindexes angestoßen wird.

- Eine Hysterese eingeführt wird, die eine erneute Rückführung des Brechungsindexes erst dann ermöglicht, wenn die relative Änderung die Summe aus einem Schwellwert und einer Hysterese überschreitet.

- Erkannt wird, dass das Smartphone weggelegt wird oder die Augen den Displayrand verlassen und als Reaktion daraufhin unter Verwendung eines Messwertfilters eine Rückführung zur Neutralstellung erfolgt, d.h. nach einer bestimmten Zeit keine Korrektur des Strahlengangs erfolgt (Neutralstellung).

- Ein Algorithmus verwendet wird, über den die Erfassung der Referenzpunkte gesteuert wird, die Messdaten für einen kontinuierlichen Abstandsbereich aufbereitet werden und für die Ansteuerung der optischen Vorrichtung bereitgestellt werden.

- Eine Personalisierung stattfindet, über die die für eine Person erfassten Referenzwerte in einem Profil abgelegt werden und die für eine weitere Person erfassten Referenzwerte in einem zweiten Profil abgelegt werden, die getrennt voneinander aufrufbar sind.

- Die Routine zur optischen Korrektur unabhängig vom ausgewählten Profil abläuft, jedoch auf die personalisierten Daten zugreift und die Einstellung der Brechungseigenschaften speziell für diese Person vornimmt.

- Die in Profilen abgelegten Daten nach einem Aufbau einer Datenverbindung an weitere Geräte übergeben werden, z.B. an andere Displays oder an Geräte zur Fertigung von Sehhilfen.

- Die für eine Person abstandsabhängigen optischen Korrekturdaten von einem externen Gerät nach Aufbau einer Datenverbindung eingelesen werden können und auf diese Daten für die Durchführung von optischen Korrekturen zugegriffen werden kann.

- Für den Bereich des Displays, auf den die Augen fokussieren, eine Lupenfunktion bereitgestellt wird.

- Das Verfahren in personalisierbaren Anzeigen eingesetzt werden kann, z.B. in Displays von Smartphones, Armbanduhren, Armaturenbrett-Anzeigen, Computer-Monitoren, Laptop-Displays, Datenbrillen oder Ähnlichem.

- Das Verfahren in temporär-personalisierten Anzeigen eingesetzt werden kann, z.B. an Displays in öffentlichen Bereichen.

- Für den Einsatz in temporär-personalisierten Anzeigen eine Übermittlung der personalisierten optischen Korrekturwerte stattfindet, die über eine Datenverbindung zwischen dem mobilen Gerät des Teilnehmers und dem (stationären) Display aufgebaut wird.

**Patentansprüche**

1. Verfahren zur Korrektur der physiologischen Akkommodation eines Betrachters während des Betrachtens eines visuellen Objektes, **dadurch gekennzeichnet, dass** auf oder an dem zu betrachtenden Objekt ein transparentes Material aufgebracht und/oder das zu betrachtende Objekt das transparente Material umfasst, wobei der Brechungsindex des transparenten Materials über eine elektronische Steuerung manuell und/oder automatisch auf die Sehstärke des Betrachters eingestellt wird.

2. Verfahren nach Anspruch 1, **dadurch gekennzeichnet, dass** es sich bei dem visuellen Objekt um ein elektronisches Anzeigeelement handelt, auf dessen Darstellungsbereich das transparente Material aufgebracht ist, bspw. in Form einer Folie, oder dessen Darstellungsbereich das transparente Material umfasst bzw. aus diesem besteht.

3. Verfahren nach einem der vorhergehenden Ansprüche, **dadurch gekennzeichnet, dass** mittels wenigstens einer Abstandsermittlungsvorrichtung der Abstand zwischen Betrachter und visuellem Objekt ermittelt oder gemessen wird und basierend auf dem ermittelten/gemessenen Abstandswert eine automatische Einstellung des Brechungsindex des transparenten Materials erfolgt, wobei der Brechungsindex bevorzugt auf einen mit dem Abstandswert assoziierten Referenzwert eingestellt wird und/oder unter Berücksichtigung eines hinterlegten Dioptrienwertes des Betrachters für jeden Abstand automatisch bestimmt wird.

4. Verfahren nach Anspruch 3, **dadurch gekennzeichnet, dass** ein oder mehrere Referenzwerte für unterschiedliche Abstandswerte in der elektronischen Steuerung gespeichert sind oder durch diese von einer externen Einheit abrufbar sind.

**5.** Verfahren nach Anspruch 3 oder 4, **dadurch gekennzeichnet, dass** die ein oder mehreren Referenzwerte mittels Lernverfahren erstellt werden, bspw. indem der Betrachter menügesteuert für eine Vielzahl an Referenzabständen zwischen Objekt und Betrachter seinen gewünschten Brechungsindex eingibt bzw. manuell einstellt.

**6.** Verfahren nach einem der vorhergehenden Ansprüche, **dadurch gekennzeichnet, dass** mehrere Referenzwerte zu einem Profil zusammengefasst werden, bspw. zu Nutzerprofilen, umgebungs- und/oder zeitabhängigen Profilen oder objektspezifischen Profilen, und bei entsprechender Profilauswahl für die Einstellung des Brechungsindex die dem Profil zugeordneten Referenzwerte zur Verfügung stehen.

**7.** Verfahren nach einem der Ansprüche 4 bis 6, **dadurch gekennzeichnet, dass** über eine externe Schnittstelle der elektronischen Steuerung und/oder des Objektes Profile und/oder Referenzwerte exportiert und/oder importiert werden können, insbesondere per Bluetooth, WLAN oder NFC, besonders bevorzugt werden Referenzwerte oder Profile von einem dem Betrachter zugeordneten Endgerät abgerufen, sobald das Endgerät in den Sichtbereich des Objektes gelangt.

**8.** Verfahren nach einem der vorhergehenden Ansprüche 3 bis 7, **dadurch gekennzeichnet, dass** die Abstandsermittlungsvorrichtung wenigstens eine Kamera aufweist, mittels der der Abstand zwischen Kamera und Betrachter, insbesondere dem Auge des Betrachters, optisch ermittelt wird und vorzugsweise mittels geometrischem Korrekturterm aus dem ermittelten Abstandswert der Abstand zwischen Auge und Darstellungsbereich berechnet wird.

**9.** Verfahren nach einem der vorhergehenden Ansprüche 3 bis 8, **dadurch gekennzeichnet, dass** die Abstandermittlungsvorrichtung auf Grundlage vorliegender oder abrufbarer Positionsdaten von Objekt und Betrachter den Abstand bestimmt.

**10.** Verfahren nach einem der vorhergehenden Ansprüche, **dadurch gekennzeichnet, dass** der Brechungsindex weiterhin in Abhängigkeit der Wellenlänge und/oder der Lichtfarbe des emittierten Lichtes des Objektes eingestellt wird, und wobei vorzugsweise bei unterschiedlichen Lichtfarben und/oder Lichtwellenlängen des emittierten Lichtes für die Bestimmung des einzustellenden Brechungsindex eine Gewichtung auf die empfindlichste Farbe und/oder eine Optimierung des Gesamteindruckes erfolgt.

**11.** Verfahren nach einem der vorhergehenden Ansprüche, **dadurch gekennzeichnet, dass** zeitgesteuert und/oder ereignisgetrieben eine Neubestimmung des Abstandes zwischen Betrachter und Objekt erfolgt und erst bei Überschreiten einer minimalen Abstandsänderung eine Anpassung des eingestellten Brechungsindex erfolgt.

**12.** Verfahren nach Anspruch 11, **dadurch gekennzeichnet, dass** eine ereignisgetrieben Neubestimmung bei einer erkannten Bewegung des Anzeigeelementes und/oder des Betrachters erfolgt, wobei eine Bewegung des Anzeigeelementes bspw. durch einen Bewegungs- bzw. Beschleunigungssensor des Anzeigeelementes erkannt wird.

**13.** Verfahren nach Anspruch 11 oder 12, **dadurch gekennzeichnet, dass** eine Hystereseschleife für die Neubestimmung des Brechungsindex angewendet wird.

**14.** Verfahren nach einem der vorhergehenden Ansprüche, **dadurch gekennzeichnet, dass** mittels einer Kamera des betrachteten Objektes erkannt wird, ob ein Betrachter das Objekt bzw. einen bestimmten Darstellungsbereich des Objektes betrachtet und/oder welcher Teilbereich des Darstellungsbereichs durch den Betrachter angesehen wird und der Brechungsindex idealerweise nur dann angepasst wird, wenn der Betrachter das Objekt betrachtet, und/oder der Brechungsindex nur für den betrachteten Teilbereich angepasst wird und/oder eine aktuelle Einstellung des Brechungsindex auf einen neutralen Wert zurückgesetzt wird, wenn der Blick des Betrachters das Objekt nicht mehr trifft.

**15.** Anzeigeelement dessen Darstellungsbereich aus einem Material mit variablem Brechungsindex besteht oder dieses umfasst oder von diesem umgeben ist und einer elektronischen Steuerung zur Einstellung des Brechungsindex, **dadurch gekennzeichnet, dass** die Steuerung zur Ausführung des Verfahrens gemäß einem der vorhergehenden Ansprüche programmiert ist.

**16.** Elektronisches Gerät, insbesondere Smartphone, Tablet, Fernseher, Computermonitor, Videowand, Wearable, ebook-Reader, Armaturenbrett einer Maschine, insbesondere für ein Fortbewegungsmittel, mit wenigstens einem Anzeigeelement gemäß Anspruch 15, wobei das elektronische Gerät und/oder das Anzeigeelement vorzugsweise wenigstens eine Abstandsbestimmungsvorrichtung aufweist, insbesondere wenigstens eine Kamera und/oder einen Positionssensor.

**Fig. 1**

# Fig. 2

**Tabelle 1**

| Abstand Display – Auge [cm] | Brechungsindex Richtung 1 | Brechungsindex Richtung 2 |
|---|---|---|
| 10 | 1,40 | 1,55 |
| 20 | 1,20 | 1,38 |
| 30 | 1,14 | 1,27 |
| 40 | 1,10 | 1,20 |
| 50 | 1,09 | 1,18 |
| 60 | 1,08 | 1,16 |
| 70 | 1,07 | 1,15 |

**Tabelle 2**

| Abstand Display – Auge [cm] | Sphärisch [Dioptrien] | Zylindrisch [Dioptrien] | Achse [°] |
|---|---|---|---|
| 10 | +0,29 | +0,85 | 90 |
| 20 | +0,28 | +0,83 | 90 |
| 30 | +0,27 | +0,80 | 90 |
| 40 | +0,25 | +0,75 | 90 |
| 50 | +0,23 | +0,68 | 90 |
| 60 | +0,20 | +0,60 | 90 |
| 70 | +0,15 | +0,45 | 90 |

**Fig. 3**

600: Erfassen der Referenzpunkte

610: Abstands- bestimmung

620: Auslesen der Korrekturwerte für den berechneten Abstand

630: Ansteuerung der optischen Vorrichtung

640: Hat sich der Abstand verändert?

650: ja

660: nein

670: Hat sich die Sehstärke verändert?

680: nein

690: ja

# EP 3 385 783 A1

**Europäisches Patentamt**
**European Patent Office**
**Office européen des brevets**

## EUROPÄISCHER RECHERCHENBERICHT

**Nummer der Anmeldung**

EP 17 16 4694

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 20 2009 006450 U1 (KRAUSS MAFFEI TECH GMBH [DE]) 1. Juli 2010 (2010-07-01) * Absatz [0006] - Absatz [0015]; Abbildung 1 * ----- | 1,15,16 | INV. G02F1/29 ADD. G02C7/02 |
| Y | US 6 619 799 B1 (BLUM RONALD D [US] ET AL) 16. September 2003 (2003-09-16) * Spalte 13, Zeile 24 - Zeile 55; Abbildungen 9,10 * ----- | 1,15,16 | |
| Y | US 2016/282635 A1 (YANG JIUXIA [CN] ET AL) 29. September 2016 (2016-09-29) * Absatz [0063] * ----- | 1,15,16 | |
| X | US 2016/109781 A1 (HU GUO QIANG [CN] ET AL) 21. April 2016 (2016-04-21) * Absätze [0060], [0061], [0089] - [0091], [0024]; Abbildung 6 * ----- | 1-16 | |

| | **RECHERCHIERTE SACHGEBIETE (IPC)** |
|---|---|
| | G02F G02C H04M |

Der vorliegende Recherchenbericht wurde für alle Patentansprüche erstellt

| Recherchenort | Abschlußdatum der Recherche | Prüfer |
|---|---|---|
| München | 5. September 2017 | Jestl, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 4694

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2017

| Im Recherchenbericht angeführtes Patentdokument | Datum der Veröffentlichung | Mitglied(er) der Patentfamilie | Datum der Veröffentlichung |
|---|---|---|---|
| DE 202009006450 U1 | 01-07-2010 | KEINE | |
| US 6619799 B1 | 16-09-2003 | AR 030528 A1 | 27-08-2003 |
| | | AR 030673 A1 | 03-09-2003 |
| | | AR 030674 A1 | 03-09-2003 |
| | | AR 031070 A1 | 10-09-2003 |
| | | AR 039753 A2 | 09-03-2005 |
| | | AR 039754 A2 | 09-03-2005 |
| | | AR 039755 A2 | 09-03-2005 |
| | | AR 040115 A2 | 16-03-2005 |
| | | AR 040116 A2 | 16-03-2005 |
| | | AR 040117 A2 | 16-03-2005 |
| | | AR 040118 A2 | 16-03-2005 |
| | | AR 040119 A2 | 16-03-2005 |
| | | AR 040120 A2 | 16-03-2005 |
| | | AT 470884 T | 15-06-2010 |
| | | AU 777787 B2 | 28-10-2004 |
| | | AU 5900200 A | 22-01-2001 |
| | | AU 2005200284 A1 | 17-02-2005 |
| | | BR 0012137 A | 26-11-2002 |
| | | CA 2377935 A1 | 11-01-2001 |
| | | CA 2652069 A1 | 11-01-2001 |
| | | CA 2781634 A1 | 11-01-2001 |
| | | CN 1372650 A | 02-10-2002 |
| | | CY 1110767 T1 | 10-06-2015 |
| | | DK 1206720 T3 | 11-10-2010 |
| | | EP 1206720 A1 | 22-05-2002 |
| | | EP 2275856 A1 | 19-01-2011 |
| | | EP 2293136 A2 | 09-03-2011 |
| | | EP 2299310 A2 | 23-03-2011 |
| | | ES 2450116 T3 | 24-03-2014 |
| | | ES 2469842 T3 | 20-06-2014 |
| | | JP 5015179 B2 | 29-08-2012 |
| | | JP 5639840 B2 | 10-12-2014 |
| | | JP 5639841 B2 | 10-12-2014 |
| | | JP 2003504665 A | 04-02-2003 |
| | | JP 2009093201 A | 30-04-2009 |
| | | JP 2011034096 A | 17-02-2011 |
| | | JP 2011039549 A | 24-02-2011 |
| | | JP 2011209749 A | 20-10-2011 |
| | | MX PA01013461 A | 04-09-2003 |
| | | PT 1206720 E | 15-09-2010 |
| | | US 6619799 B1 | 16-09-2003 |
| | | US 9323074 B1 | 26-04-2016 |
| | | US 9411173 B1 | 09-08-2016 |
| | | US 2004051846 A1 | 18-03-2004 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT
ÜBER DIE EUROPÄISCHE PATENTANMELDUNG NR.**

EP 17 16 4694

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2017

| Im Recherchenbericht angeführtes Patentdokument | Datum der Veröffentlichung | Mitglied(er) der Patentfamilie | Datum der Veröffentlichung |
|---|---|---|---|
| | | US 2004056986 A1 | 25-03-2004 |
| | | US 2005168687 A1 | 04-08-2005 |
| | | US 2005206844 A1 | 22-09-2005 |
| | | US 2005213027 A1 | 29-09-2005 |
| | | US 2005219460 A1 | 06-10-2005 |
| | | US 2006139570 A1 | 29-06-2006 |
| | | US 2006192918 A1 | 31-08-2006 |
| | | US 2006238701 A1 | 26-10-2006 |
| | | US 2007081126 A1 | 12-04-2007 |
| | | US 2007091258 A1 | 26-04-2007 |
| | | US 2007146627 A1 | 28-06-2007 |
| | | US 2007216862 A1 | 20-09-2007 |
| | | US 2008316425 A1 | 25-12-2008 |
| | | US 2009033866 A1 | 05-02-2009 |
| | | US 2009079938 A1 | 26-03-2009 |
| | | US 2011037946 A1 | 17-02-2011 |
| | | US 2011279772 A1 | 17-11-2011 |
| | | US 2012008094 A1 | 12-01-2012 |
| | | US 2013250191 A1 | 26-09-2013 |
| | | US 2014036226 A1 | 06-02-2014 |
| | | US 2014218647 A1 | 07-08-2014 |
| | | US 2016192836 A1 | 07-07-2016 |
| | | US 2016363783 A1 | 15-12-2016 |
| | | US 2017010480 A1 | 12-01-2017 |
| US 2016282635 A1 | 29-09-2016 | CN 103472595 A | 25-12-2013 |
| | | US 2016282635 A1 | 29-09-2016 |
| | | WO 2015024322 A1 | 26-02-2015 |
| US 2016109781 A1 | 21-04-2016 | CN 104216151 A | 17-12-2014 |
| | | US 2016109781 A1 | 21-04-2016 |
| | | WO 2014190807 A1 | 04-12-2014 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10222151 B4
- DE 10129443 B4
- EP 0977077 A2
- US 6215920 B1

**In der Beschreibung aufgeführte Nicht-Patentliteratur**

- Photoinduzierte Brechungsindexänderung und hochbrechende konkomitierend UV absorbierende Chromophore. **MARTIN SCHRAUB.** Neue polymere Werkstoffe für ophthalmologische Implantate. Universität Marburg, 2011